# EUROPEAN PATENT APPLICATION

(11) **EP 1 284 575 A1**
(43) Date of publication of application: **19.02.2003**
(21) Application number: 02707161.2
(22) Date of filing: 26.03.2002
(51) Int. Cl.: H04M 3/42, H04M 3/00, H04M 11/00, H04L 12/46, H04L 12/56, H04B 7/26, H04Q 7/38

(54) **METHOD AND APPARATUS FOR PROVIDING COMMUNICATION SERVICE**

(30) Priority: 26.03.2001 JP 2001088151
(71) Applicant: NTT DoCoMo, Inc., Tokyo 100-6150 (JP)
(72) Inventor: NAKAJIMA, Takayuki, Yokohama-shi, Kanagawa 240-0013 (JP)
(74) Representative: HOFFMANN - EITLE
(86) International application number: JP0202905
(87) International publication number: WO02078307

(57) **Abstract**

Service terminal 101 sends an ID or an IP address particular to the service terminal to mobile terminal 105. Mobile terminal 105 notifies the ID or the IP address, and a telephone number/a serial number of the service terminal to subscriber system 103. Subscriber system 103 performs authentication in response to the notification, and when the authentication is recognized, it notifies service gateway 102 of the use of IP address notified by mobile terminal 105. Service gateway 102 interconnects service terminal 101 and Internet 104. Subscriber system 103 monitors the interconnection between mobile terminal 105 and the Internet 104 to charge service fee.

## Description

### Technical Field

The present invention relates to a device and method for providing communication services, such as a wireless LAN connection and a cable TV service, via a network.

### Background Art

In recent years, various communication services utilizing networks have been provided. They include, for example, cable TV, satellite TV, pay-per-view TV, and others. Additionally, the Internet and wireless LANs are good examples of services utilizing networks. However, use of such services must necessarily be limited to only entitled users, or users who pay for a particular service. It is therefore necessary for a service provider, when providing services, to utilize either an authentication system for determining whether a user is entitled to a provided service; and/or a charging system for collecting fees for the service provided in a network.

However, the use of authentication systems and charging systems in a network, and collection of a fee from new subscribers is costly. Further, since authentication systems handle only important authentication information, it is necessary to provide enhanced security to keep user information confidential. The cost of providing such authentication systems in a network is extremely high.

### Disclosure of Invention

The present invention has been made to overcome the stated problems of the conventional art, and, accordingly, one object of the present invention is to eliminate a necessity for service providers to employ a user authentication process both when providing a network service, and when charging a fee for the service. A further object of the present invention is to eliminate the need for service providers to carry out charging process when charging a service fee for a service provided through the network.

To achieve the stated objects, the inventor of the present invention focuses attention on a subscriber system of mobile networks, wherein users are registered in a database of the system, and can thereby be identified. Such subscriber system enables charging a user at the time of providing services. For instance, when a user utilizes a service provided in a network such as a wireless LAN, or a pay-per-view TV, and the user is a person registered in a database of a subscriber system, a service provider is able to provide services with ease.

To achieve the above-stated objects, the present invention provides a communication service providing method comprising: a forwarding step in which a mobile terminal capable of conducting mobile communication via a first communication network forwards a service request including service delivery point identification information specifying a service delivering point through which a service using a second communication network is provided and identification information of the mobile terminal to a subscriber system of the first communication network; an authentication step in which the subscriber system performs user authentication for the mobile terminal on the basis of the identification information of the mobile terminal included in the service request; and a service providing step for performing a process for providing a service using said second communication network to the service delivery point specified by the service delivery point identification information when the authenticity of a user of the mobile terminal is recognized at the authentication step.

In a preferred embodiment, a communication service providing method comprises a receiving step, wherein the mobile terminal receives identification information particular to a service terminal that is able to get a service using the second communication network from the service terminal as the service delivery point identification information.

Further, in another preferred embodiment, the service providing step includes a service permission notifying step, wherein the subscriber system sends a service permission notification containing the service delivery point identification information included in the service request to a service gateway interconnecting the service terminal and the second communication network; and a connecting step, wherein the service gateway connects the service terminal specified by the service delivery point identification included in the service permission notification to the second .communication network.

In another preferred embodiment, the service delivery point identification information contains an IP address issued by the service gateway, and setup information (access point information, Domain Name System information and so forth) of the issuing process.

Further, in another preferred embodiment, the identification information of the mobile terminal includes at least one of a telephone number, a serial number, or SIM - ID of the mobile terminal.

In another preferred embodiment, the subscriber system, by using the second communication network, monitors a service providing condition of the service delivery point specified by the service delivery point identification information; and charges a user of the mobile terminal on the basis of the monitoring result.

From another viewpoint, the present invention comprises: a first communication network including a subscriber system; a second communication network; a service gateway connected to said second communication network; and a mobile terminal capable of conducting a communication via the first communication network, the service gateway being connected to a second communication network. The mobile terminal further comprises a communication unit for transmitting a service request including service delivery point identification information, specifying a service delivery point through which a service using the second communication network is provided, and identification information of the mobile terminal to the subscriber system. The subscriber system comprises an authentication unit that performs user authentication for the mobile terminal on the basis of identification information of the mobile terminal included in the service request, and transmits a service permission notification containing the service delivery point identification information included in the service request when a user of the mobile terminal is authenticated. The service gateway comprising a communication line connecting unit interconnecting the service delivery point specified by the service delivery point identification information contained in the service permission notification to the second communication network.

In one preferred embodiment, the communication system further comprises a service terminal that is able to obtain a service using the second communication network, and the communication unit of the mobile terminal has a receiving means for receiving identification information of the service terminal as service delivery point identification.

In another preferred embodiment, identification information received by the receiving means includes an IP address issued by the service gateway for the service terminal.

In a further preferred embodiment, identification information of the mobile terminal includes at least one of a telephone number and a serial number of the mobile terminal.

In a still further preferred embodiment, the subscriber system comprises a monitoring unit for monitoring a connection between the second communication network and the service terminal, and a charging unit for charging a user of the mobile terminal on the basis of the monitoring result of the monitoring unit.

From another viewpoint, the present invention provides a subscriber system comprising a communication unit for receiving a service request containing identification information of a mobile terminal, which system is capable of performing a mobile communication utilizing a first communication network, and service delivery point identification information specifying a service delivery point through which a service using a second communication network is provided; and an authentication unit for performing user authentication for the mobile terminal on the basis of the identification information of the mobile terminal included in the service request, and which permits the provision of a service utilizing the second communication network to a service delivery point specified in the service delivery point identification.

In one preferred embodiment, a subscriber system comprises a monitoring unit that monitors a service providing condition, using the second communication network, to the service delivery point specified by the service delivery point identification information; and a charging unit for charging a user of the mobile terminal.

### Brief Description of the Drawings

Fig. 1 shows a configuration of a communication system according to the present invention.
Fig. 2 is a block diagram showing a configuration of a communication system according to one embodiment of the present invention.
Fig.3 is flow chart showing a communication service providing method of one embodiment of the present invention.
Figs.4 to.6 show modifications according to one embodiment of the present invention.

### Best Mode for Carrying Out the Invention

Referring to the figures, preferred embodiments of the present invention will now be explained in detail.

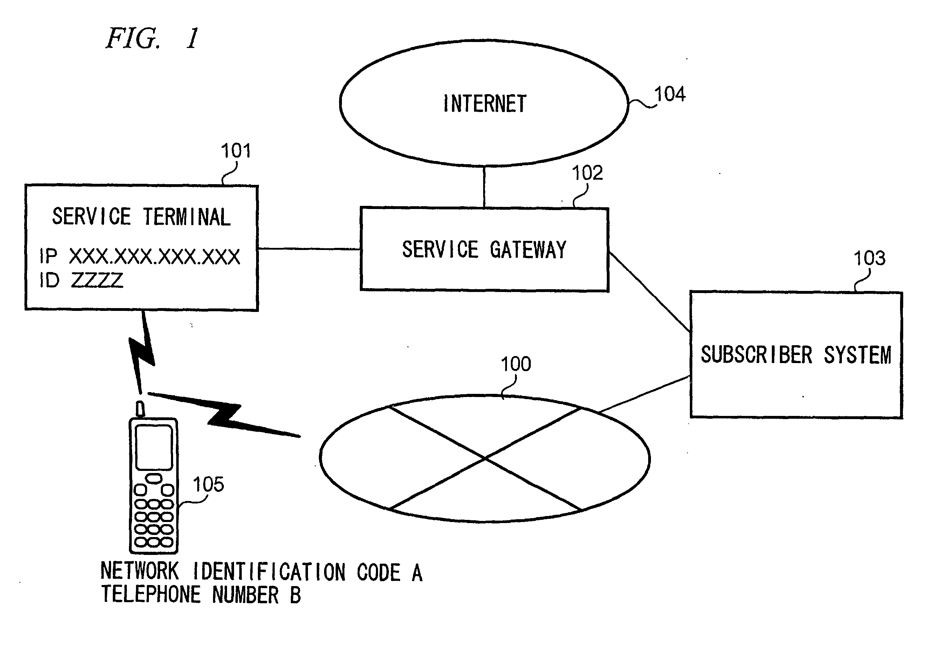

Fig.1 shows an example of a configuration of a communication system using the present invention, and only the parts relating to the present invention are shown conceptually.

The communication system includes a mobile communication network 100, a service terminal 101, a service gateway 102, a subscriber system 103, the Internet 104, and a mobile terminal 105. For the sake of simplicity, in Fig.1 only one service terminal 101, one service gateway 102 and one mobile terminal 105 are shown respectively. In actuality, however, several service terminals 101, service gateways 102, and mobile terminals 105 exist in the communication system.

One service gateway 102 may serve either one or a plurality of service terminals 101.

In the example shown in Fig.1, service terminal 101 is a terminal provided to enable a user to obtain the charged internet-access service. Service terminal 101 is connected to service gateway 102 through the communication line, and also stores as its own identification information ID (ZZZZ) and an IP address (XXX.XXX.XXX.XXX) for accessing the Internet 104 via service gateway 102. Service gateway 102 manages the IP address (XXX.XXX.XXX.XXX) of serving service terminal 101, thereby controlling access between each service terminal 101 and the Internet 104. A service terminal 101 serving for a service gateway 102 can be connected to the Internet via the service gateway 102. In the present embodiment, service gateway 102 interconnects the Internet 104 and service terminal 101 in response to a command from subscriber system 103. In other words, service gateway 102 acts as a proxy server, on behalf of subscriber system 103, interconnecting service terminal 101 and the Internet 104.

Mobile terminal 105 performs a communication process through communication network 100, and further performs a wireless communication with service terminal 101. Further, mobile terminal 105 stores, as its own identification information, network identification code (A)which is a serial number and telephone number (B) in advance.

Subscriber system 103, similar to a subscriber system in ordinary mobile communication systems, is used to control mobile terminal 105. More particularly, subscriber system 103 stores information such as a telephone number and a serial number of mobile terminal 105. Further, fees chargeable for communication processes carried out by mobile terminal 105 (e.g. communication fees and service providing fees) can be charged by subscriber system 103.

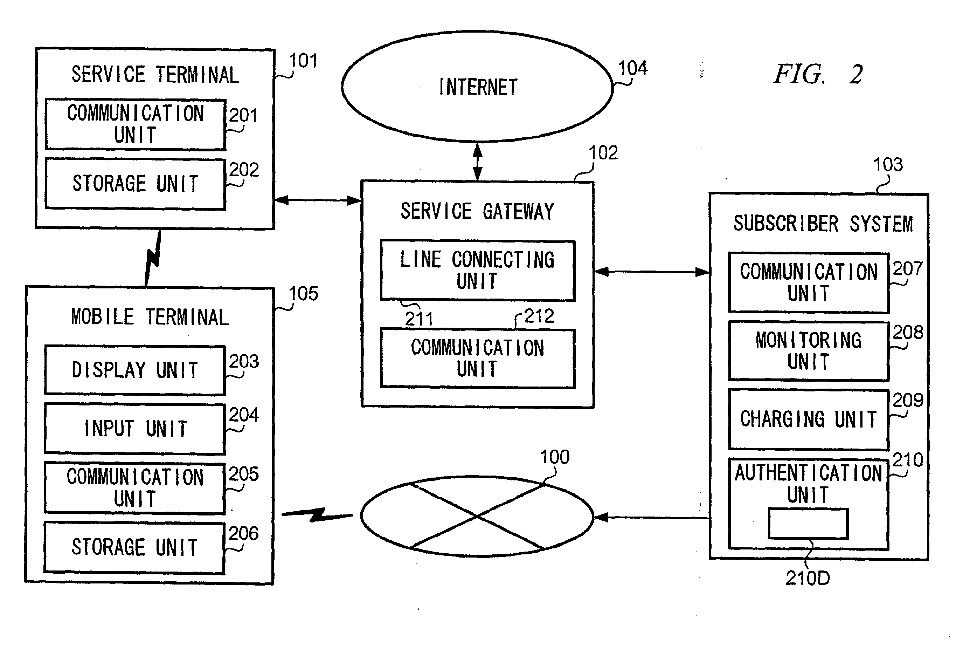

With reference to the functional block view of Fig.2, description will now be made with respect to functions of the mobile communication system of the present embodiment.

Service terminal 101 comprises a communication unit 201, and a storage unit 202. Communication unit 201 functions to conduct communication through the Internet 104 using the communication link provided in service gateway 102; and also functions to conduct at close range wireless communication with the mobile terminal 105. In conducting communication at close range, a variety of known methods may be used, such as a Bluetooth connection utilizing a bandwidth of 2.45 GHz, the demand for which is expected to rise in the future, a direct cable connection, infrared data communication, and others. An ID particular to service terminal 101 and an IP address managed by service gateway 102 are pre-installed in storage unit 202, respectively.

Mobile terminal 105 has a display unit 203, an input unit 204, a communication unit 205, and a storage unit 206. Display unit 203 is comprised of a Liquid Crystal Display that displays content and images on the basis of data received by communication unit 205. Input unit 204 has buttons for inputting data for transmission to an external device. Communication unit 205 directly, or through communication network 100, conducts wireless communication with subscriber system 103. Identification information that specifies mobile terminal 105 is stored in storage unit 206. As identification information, at least one of the serial number or the telephone number of mobile terminal 105 can be used.

Subscriber system 103 comprises a communication unit 207, a monitoring unit 208, a charging unit 209, and an authentication unit 210. Communication unit 207 functions to communicate with mobile terminal 105 and service gateway 102. Authentication unit 210, upon receiving a service request from mobile terminal 105, performs a user authentication process with respect to mobile terminal 105. In the present embodiment, the service request includes an access request from service terminal 101 to the Internet 104. Authentication unit 210, when a user of mobile terminal 105 is authenticated, sends a service permission notification to service gateway 102 via communication unit 207. Monitoring unit 208 monitors a connection between the Internet 104 and service terminal 101. Charging unit 209 calculates service fees which will result from use of communication network 100 by mobile terminal 105 and use of the Internet 104 by service terminal 101.

The service gateway 102 comprises a communication line connecting unit 211 and a communication unit 212. Communication unit 212 receives a service permission notification transmitted from subscriber system 103, and relays the communication between service terminal 101 and the Internet 104. Further, communication unit 212 has a function for transmitting to subscriber system 103 a charging request for communication conducted through service terminal 101. Communication line connecting unit 211, as described above, connects service terminal 101 and the Internet 104 in accordance with the service permission notification from subscriber system 103.

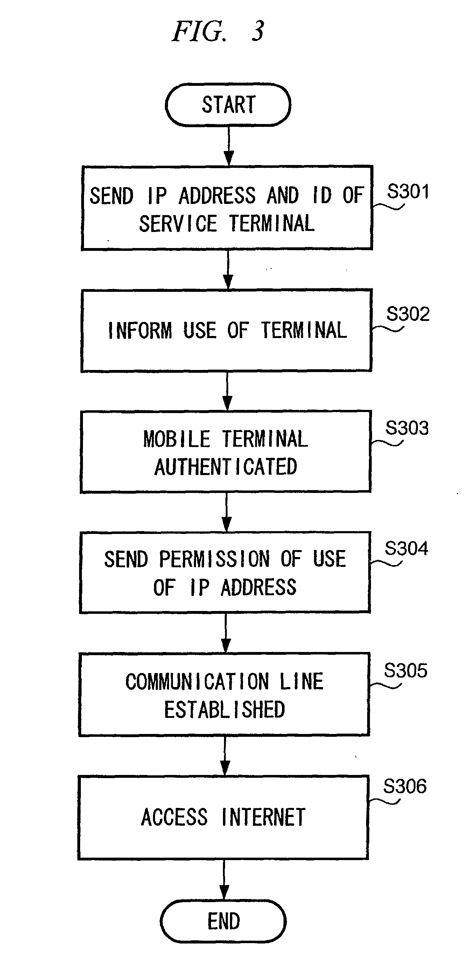

Turning now to the flow chart shown in Fig.3, description will now be made with respect to the providing method of the communication service according to the present embodiment.

First, mobile terminal 105 and service terminal 101 are connected to each other. The connection can be made by using the following methods, wherein, service terminal 101 responds to an access request from service terminal 101. When a connection is established, service terminal 101 sends an ID (ZZZZ) and an IP address (XXX.XXX.XXX.XXX) to mobile terminal 105 as identification information particular to the service terminal (step S301). For the sake of convenience of a user, it is preferable to perform the step S301 as follows: first, service terminal 101 continuously sends information indicating a type of service that can be provided to a user (in this case, the service refers to a charged internet-connected service). Upon receiving such information, mobile terminal 105 displays it on display unit 203. When the user, on the basis of the information content displayed, inputs an instruction requesting the service, mobile terminal 105 accesses service terminal 101 and transmits a request for an ID and an IP address. In response, service terminal 101 sends its ID and IP address to mobile terminal 105.

Mobile terminal 105 that has received the ID and the IP address of the service terminal, transmits a service request to subscriber system 103 via communication network 100 (step S302). The service request includes a service delivery point identification code identifying a service delivery point through which a service using the Internet is provided, specifically, ID (ZZZZ) and an IP address (XXX.XXX.XXX.XXX) of service terminal 101; and also identification information of mobile terminal 105, specifically, a network identification code (A) and a telephone number (B) of the mobile terminal.

The service request is received by communication unit 207 of subscriber system 103, and is transmitted to identification unit 210. Identification unit 210, determines (authenticates) whether mobile terminal 105 is under management of the subscriber system (step S303) by determining whether the network identification code (A) and the telephone number (B) included in the service request are stored in a subscriber database 210D.

When the determination in step S303 is "YES", authentication unit 210 extracts from the service request the service delivery point identification code, e.g., the ID (ZZZZ) and the IP address (XXX.XXX.XXX.XXX) of service terminal 101; and authentication unit 210 sends a service permission notification including the service delivery point identification to service gateway 102 (step S304).

The service permission notification is received by communication unit 212 of service gateway 102, and is then transmitted to communication line connecting unit 211. When the communication line connecting unit 211 extracts from the service permission notification the ID (ZZZZ) and the IP address (XXX.XXX.XXX.XXX) which together constitute a service delivery point identification code, it establishes a communication line connecting service terminal 101 to the Internet in accordance with the extracted information (step S305). In this way, connection between service terminal 101 and the Internet 104 via communication line connecting unit 211 is established (step S306).

Following establishment of the connection, monitoring unit 208 of subscriber system 103 continuously monitors the connection between service terminal 101 and the Internet 104, and charges a user on the basis of an access time or quantity of transmitted data. Monitoring a connection between the service terminal and the Internet can be performed, for example, by acquiring information including an access condition, or a quantity of transmitted data from service gateway 102 by means of communication unit 207 of subscriber system 103. In a case of acquiring access condition information, service gateway 102 continuously transmits to subscriber system 103 a signal indicating that the service terminal 101 and the Internet 104 are connected to each other, for the duration of the connection. Charging unit 209 of the subscriber system measures a length of the time over which a signal indicating connection is received, so as to calculate service fees to be charged to a user. In a case of acquiring data transmission quantity information, when data is transmitted through a communication line connecting the Internet 104 and service terminal 101, service gateway 102 informs subscriber system 103 of an amount of data transmitted. On the basis of this information, charging unit 209 of subscriber system 103 charges data delivery fees.

In a preferred embodiment, subscriber system 103 generates a charging bill on the basis of a transmission time or the data transmission quantity, and sends the bill to mobile terminal 105 by means of a short mail system (SMS) when the session between service terminal 101 and the Internet 104 is terminated.

So far, a preferred embodiment of the present invention has been described, but the present invention is in no way limited to the embodiment described above, and is susceptible to a variety of modifications.

Specifically, in the embodiment described above, an example is given with respect to a communication system in which a service terminal is provided and a mobile terminal accesses a second communication network via the service terminal. However, it is possible to incorporate the function of a service terminal into a mobile terminal so that the mobile terminal can directly access the second communication network.

In the proposed embodiment, service delivery point information, e.g., IP addresses for accessing the Internet 104 are pre-installed in mobile terminal 105. In such a case, an IP address managed by service gateway 102 is sent along with network identification code information of the mobile terminal in communication network 100 to subscriber system 103 from mobile terminal 105 via communication network 100. Subscriber system 103, on the basis of the information sent from mobile terminal 105, authenticates access of mobile terminal 105 to the Internet 104.

When authentication is recognized, subscriber system 103 instructs service gateway 102 to connect the mobile terminal 105 to the Internet 104.

Upon receiving the command, service gateway 102 connects mobile terminal 105 to the Internet.

Thus, it is possible for a mobile terminal to access the Internet without the need for a service terminal.

While in the embodiment described above, an example is given in which wireless communication is conducted between a mobile terminal and a service terminal, a dedicated line, a wireless channel, or a Universal Serial Bus can be employed to interconnect the service terminal and the mobile terminal for wireless and radio communication.

Further, while in the embodiment described above, each service terminal stores an IP address, an IP address may be stored in a service gateway. In this case, the service gateway issues and stores plural IP addresses for respective service terminals in advance. Thus, when the service gateway receives a signal from a service terminal indicating that the service terminal and a mobile terminal are connected to each other, the service gateway selects one of the stored IP addresses to be sent to the service terminal.

Further, it is possible to provide a second subscriber system between a service gateway and a subscriber system that performs a charging process on the basis of information relating to the service gateway. Thus, it is possible to perform an authentication process in the first subscriber system, and to perform a subsequent charging process in the second subscriber system.

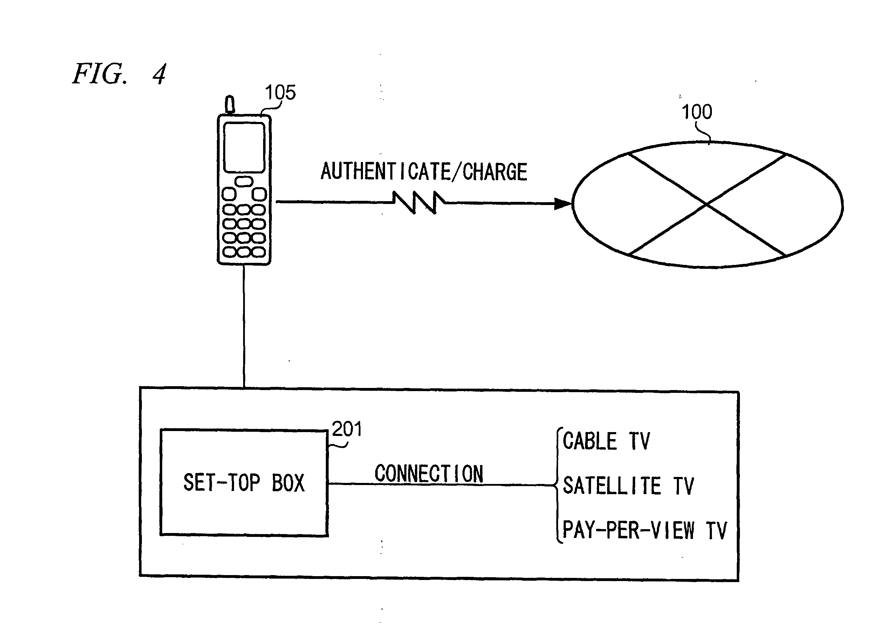

Figs.4 through 8 show modifications of the embodiment described above.

In the modification shown in Fig.4, the embodiment described above is applied to a cable TV broadcasting system, a satellite TV broadcasting system, and a pay-per-view TV broadcasting system, using a network. A set-top-box 201 is connected to a TV set (not shown) to be provided in a room of a hotel together with the TV set. Set-top box 201 is a device for receiving a broadcast transmission from a broadcast station such as a cable TV broadcast, and for providing the transmission to the TV set. In the modification, set-top box 201 includes the function of service terminal 101, which is described in the embodiment above. A device acting as service gateway 102 in the embodiment described above is provided between set-top box 201 and a broadcast station for receipt of, for example, cable TV broadcasts (not shown in Fig.4). Mobile terminal 105 acquires identification information of set-top box 201 (service delivery point identification) from the set-top box, and sends a service request including the identification information and a network identification code A, or a telephone number B, of mobile terminal 105, to subscriber system 103 in mobile communication network 100. Subscriber system 103 authenticates the user of mobile terminal 105 on the basis of the network identification code A or the telephone number B included in the service request. In a case that the user is authenticated , subscriber system 103 sends a service permission notification, including the identification of set-top box 201, to the device acting as a service gateway. The device connects set-top box 201 specified by the identification information included in the service permission notification to a broadcast station and the user of mobile terminal 105 is therefore able to receive TV broadcasts. Subscriber system 103 monitors a connection between set-top box 201 and a broadcast station to determine viewing fees for TV broadcasts. These viewing fees are charged to a user of mobile terminal 105.

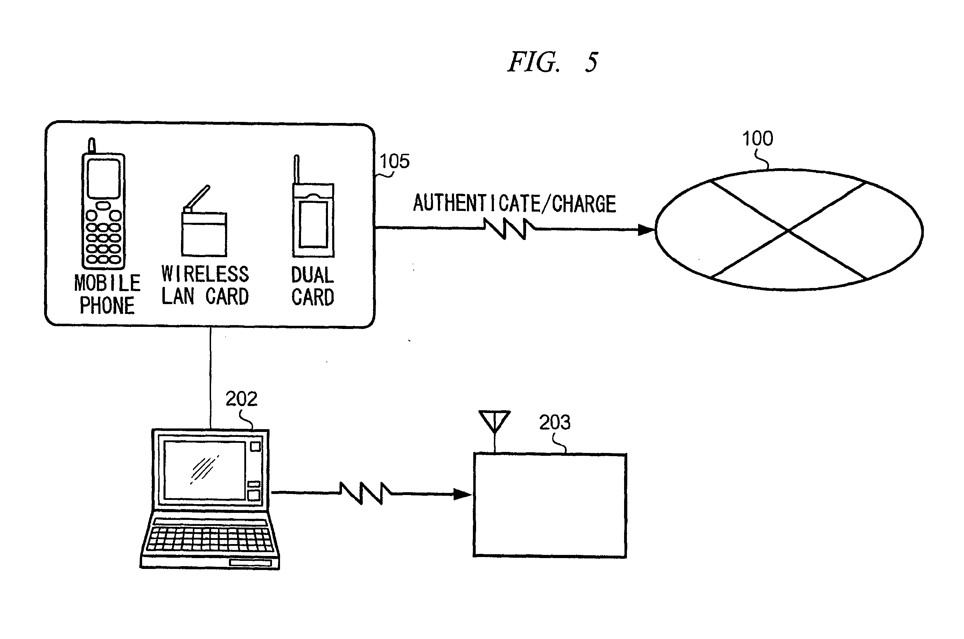

The modification shown in Fig.5 shows an embodiment used in a wireless LAN. In Fig.5, a personal computer 202 is able to access the wireless LAN via a wireless access point 203. Personal computer 202 is provided as service terminal 101 in the embodiment described above. A communication card, such as a mobile phone card, a wireless LAN card, a dual card, and so on which act as mobile terminal 105 are connected to the personal computer 202. When mobile terminal 105 is instructed to connect personal computer 202 to a wireless LAN, it extracts identification information particular to the personal computer from personal computer 202, and transmits a service request including the identification and a network identification code A or a telephone number B of mobile terminal 105 to subscriber system 103 in mobile communication network 100. Subscriber system 103 authenticates a user of mobile terminal 105 on the basis of the network identification code A or the telephone number B included in the service request. When the user is authenticated, a process connecting personal computer 202 is connected to the wireless LAN. In such a case, the concrete steps are the same as those described in the modification shown in Fig.4.

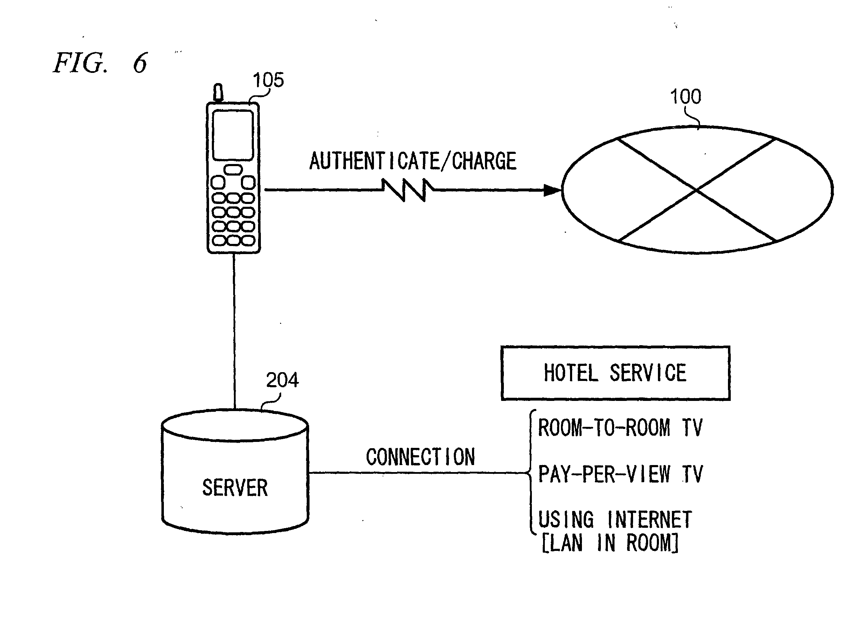

The modification shown in Fig.6 relates to an embodiment of the present invention used in a hotel service. In a hotel, a variety of electronic equipment is made available to guests, including, for example, room-to-room telephones, pay-per-view TV, and Internet connection equipment. A server 204 for controlling the functions of such equipment is provided in the hotel, and a wireless device connected to server 204 is provided in each room of the hotel. Mobile terminal 105 conducts communication with server 204 via the wireless device. Mobile terminal 105 accesses server 204 via the wireless device in response to an instruction made by a user who wishes to use the hotel service, and requests server 204 for identification information of the server. Server 204 determines the room number of the room where the user of mobile terminal 105 is resident, by using the wireless device that has relayed the request of the identification information, and stores the room number. Then, server 204 transmits the identification particular to the server to mobile terminal 105 via the wireless device. Mobile terminal 105 transmits the identification acquired from server 204, along with a service request including a network identification code A or a telephone number B of mobile terminal 105, to subscriber system 103 provided in mobile communication network 100. Subscriber system 103 authenticates the user of mobile terminal 105 on the basis of the identification code A or the telephone number B; and if the user is authenticated, subscriber system 100 sends a service permission notification permitting provision of the service to server 204. Upon receipt of the notification, server 204 provides the required hotel service to a room corresponding to a room number that has already been stored. The process used for charging a service fee is the same as that used in the modification shown in Fig.3.

## Claims

1. A communication service providing method comprising:
a forwarding step in which a mobile terminal capable of conducting a mobile communication via a first communication network forwards a service request including a service delivery point identification specifying a service delivery point through which a service using a second communication network is provided, and identification information of the mobile terminal, to a subscriber system of the first communication line;
an authentication step in which the subscriber system performs a user authentication for the mobile terminal on the basis of the identification information of the mobile terminal included in the service request; and
a service providing step for performing a process for providing a service using said second communication network to the service delivery point specified by the service delivery point identification, when authenticity of a user of the mobile terminal is recognized at the authentication step.

2. A communication service providing method according to claim 1 further comprising a receiving step, wherein said mobile terminal receives identification information particular to a service terminal that is able to get a service using the second communication network from the service terminal as the service delivery point identification.

3. A communication service providing method according to claim 2, wherein said service providing step comprises:
a service permission notifying step, wherein said subscriber system sends a service permission notification containing the service delivery point identification included in the service request to a service gateway interconnecting the service terminal and the second communication network; and
a connecting step, wherein said service gateway connects the service terminal specified by the service delivery point identification included in the service permission notification to said second communication network.

4. A communication service providing method according to claim 3, wherein said service delivery point identification includes an IP address issued by said service gateway.

5. A communication service providing method according to claim 1, wherein the identification information of said mobile terminal contains at least one of a telephone number or a serial number of the mobile terminal.

6. A communication service providing method according to claim 1, wherein said subscriber system, by using the second communication network, monitors a service providing condition of the service delivery point specified by the service delivery point identification information; and charges the user of said mobile terminal on the basis of the monitoring.

7. A communication system comprising a first communication network with a subscriber system, a second communication network, a service gateway connected to said second communication network, and a mobile terminal capable of conducting communication via said first communication network,
said mobile terminal comprising a communication unit for transmitting a service request including service delivery point identification information, specifying a service delivery point through which a service using the second communication network is provided, and identification information of the mobile terminal to the subscriber system;
said subscriber system comprising an authentication unit which performs a user authentication for said mobile terminal on the basis of the identification information of said mobile terminal included in the service request, and transmits a service permission notification containing the service delivery point identification information included in said service request when an authority of a user of said mobile terminal is recognized; and
said service gateway comprising a communication line connecting unit interconnecting the service delivery point specified by the service delivery point identification information contained in said service permission notification to the second communication network.

8. A communication system according to claim 7, wherein said communication system further comprises a service terminal, and the communication unit of said mobile terminal comprises a receiving means for receiving identification of said service terminal as said service delivery point identification.

9. A communication system according to claim 8, wherein said identification information received by said receiving means includes an IP address issued by said service gateway for said service terminal.

10. A communication system according to claim 7, wherein said identification information of said mobile terminal includes at least one of a telephone number or a serial number of the mobile terminal.

11. A communication system according to claim 7, wherein said subscriber system further comprises:
a monitoring unit for monitoring a connection between said second communication network and said service terminal; and
a charging unit for charging a user of said mobile terminal on the basis of the monitoring result of said monitoring unit.

12. A subscriber system, comprising:
a communication unit for receiving a service request including identification information of a mobile terminal, which is capable of performing a mobile communication using a first communication network, and service delivery point identification information specifying a service delivery point through which a service using a second communication network is provided; and
an authentication unit performing a user authentication for the mobile terminal on the basis of the identification information of the mobile terminal included in the service request, and permits the provision of a service using the second communication network to a service delivery point specified by the service delivery point identification information.

13. A subscriber system according to claim 12, further comprising:
a monitoring unit that monitors a service providing condition, using the second communication network, of the service delivery point specified by the service delivery point identification information; and
a charging unit charges a user of the mobile terminal.
